# EUROPEAN PATENT APPLICATION

(11) **EP 4 495 317 A1**
(43) Date of publication of application: **22.01.2025**
(21) Application number: 23770748.4
(22) Date of filing: 13.03.2023
(51) Int. Cl.: D06F 95/00

(54) **WASHING SYSTEM**

(30) Priority: 17.03.2022 JP 2022042102
(71) Applicant: Wash-Plus Co., Ltd., Urayasu-shi, Chiba 279-0004 (JP)
(72) Inventor: TAKANASHI Kentaro, Urayasu-shi Chiba 279-0004 (JP)
(74) Representative: Global IP Europe Patentanwaltskanzlei
(86) International application number: PCT/JP2023/009696
(87) International publication number: WO 2023/176793

(57) **Abstract**

[Problem] Reduce the cost of washing laundry.

[Means for solving the problems] The laundry system 501 comprises a laundry tub 521 to wash laundry using laundry water, a laundry water tank 548, a laundry water supply means to supply the laundry water stored in the first bottle (laundry water gallon bottle 561) to the laundry water tank 548, an alkaline ionized water supply means to mix the alkaline ionized water with the laundry water stored in the laundry water tank 548 by supplying alkaline ionized water stored in the second bottle (alkaline ionized water bottle 562) to the laundry water tank 548, a first laundry water circulation pipe that supplies laundry water stored in the laundry water tank 548 to laundry tub 521, and a second laundry water circulation pipe to supply the laundry water used for washing in the laundry tub 521 to the laundry water tank 548.

## Description

### Technical Field

The present invention relates to a laundry system to wash laundry such as garments. Background Technology

The following Patent Document 1 discloses a method of washing garments using alkaline ionized water.

### Prior Art Document

### Patent Document

Patent document 1: Unexamined Patent Publication No. 2020-993

### Summary of the Invention

### Problem to be Solved by the Invention

The method described in patent document 1 does not consider saving water resources used for washing. In addition, alkaline ionized water is more expensive than tap water, so there is a need to reduce the cost of each wash cycle.

The present invention was made in consideration of the above circumstances and is to provide a laundry system that can reduce the cost of washing laundry.

### [Means for Solving the Problems]

The laundry system, according to the first aspect of the present invention, is characterized by a laundry tub used to wash garments using laundry water, a laundry water tank, a laundry water supply means to supply the laundry water to the laundry water tank, an alkaline ionized water supply means to mix alkaline ionized water with the laundry water stored in the laundry water tank by supplying alkaline ionized water to the laundry water tank, a first laundry water circulation pipe that supplies laundry water stored in the laundry water tank to laundry tub, and a second laundry water circulation pipe to supply the laundry water used for washing in the laundry tub to the laundry water tank.

The laundry system, according to the second aspect of the present invention, is characterized by a laundry tub used to wash garments using laundry water, a laundry water tank, a laundry water supply means to supply the laundry water stored in the first bottle to the laundry water tank, an alkaline ionized water supply means to mix the alkaline ionized water with the laundry water stored in the laundry water tank by supplying alkaline ionized water stored in the second bottle to the laundry water tank, a first laundry water circulation pipe to supply laundry water stored in the laundry water tank to laundry tub, and a second laundry water circulation pipe to supply the laundry water used for washing in the laundry tub to the laundry water tank.

Preferably, the laundry system is further provided with a filtration device in the second laundry water circulation pipe to remove solid matter in the laundry water used in the laundry tub for washing.

As a result, the laundry water discharged from the laundry tub after washing is stored in the laundry water tank through the second laundry water circulation pipe and supplied again to the laundry tub through the first laundry water circulation pipe to be reused in another laundry washing process, thereby the cost of washing laundry can be reduced.

### Effect of the Invention

The laundry system of the present invention makes it possible to reduce the cost of washing laundry.

### Brief Description of the Drawings

[Fig. 1] An explanation drawing showing the overview of the process of a laundry system according to the first embodiment.
[Fig. 2] A block diagram showing the configuration of a laundry system according to the first embodiment.
[Fig. 3] A flowchart showing the flow of processes of a laundry system according to the first embodiment.
[Fig. 4] An explanation drawing showing an overview of the process of a laundry system according to the second embodiment.
[Fig. 5] A block diagram showing the configuration of a laundry system according to the second embodiment.
[Fig. 6] A flowchart showing the flow of processes of a laundry system according to the second embodiment.
[Fig. 7] An explanation drawing showing an overview of the process of a laundry system according to the third embodiment.
[Fig. 8] A block diagram showing the configuration of a laundry system according to the third embodiment.
[Fig. 9] A flowchart showing the flow of processes of the laundry system according to the third embodiment.
[Fig. 10] A schematic diagram of the laundry system according to the fourth embodiment.
[Fig. 11] A flowchart showing the flow of processes of the laundry system according to the fourth embodiment.
[Fig. 12] A schematic diagram of the laundry system according to the fifth embodiment.
[Fig. 13] A schematic diagram of the laundry system according to the sixth embodiment.
[Fig. 14] A schematic diagram of the laundry system 1f according to the seventh embodiment.
[Fig. 15] A figure showing a laundry water circulator installed in the lower part of a washing machine with the laundry water circulator housed inside a single enclosure.
[Fig. 16] An enlarged drawing of the laundry water circulator.
[Fig. 17] An enlarged drawing of the first filtration device
[Fig. 18] An electrical system diagram of a washing machine and laundry water circulator.
[Fig. 19] A figure showing the relationship between the operations of a washing machine and the operations of a laundry water circulator.
[Fig. 20] A cross-sectional view from the front side showing the configuration of the laundry system according to the ninth embodiment.
[Fig. 21] A cross-sectional view from the right side showing the laundry water circulator used in the laundry system according to the ninth embodiment.
[Fig. 22] A cross-sectional view from the left side showing the laundry water circulator used in the laundry system according to the ninth embodiment.
[Fig. 23] A cross-sectional view from the top showing the configuration of the laundry system according to the ninth embodiment.
[Fig. 24] A perspective view showing the laundry water tank used in the laundry system according to the ninth embodiment.

### Mode for Carrying Out the Invention

The embodiments of the present invention are explained below with reference to the drawings. The same symbols are used for identical components in all the drawings, and redundant explanations are omitted.

### <First embodiment>

The first embodiment comprises a laundry system that circulates the rinse wastewater discharged after the rinsing process and reuses it in the washing process.

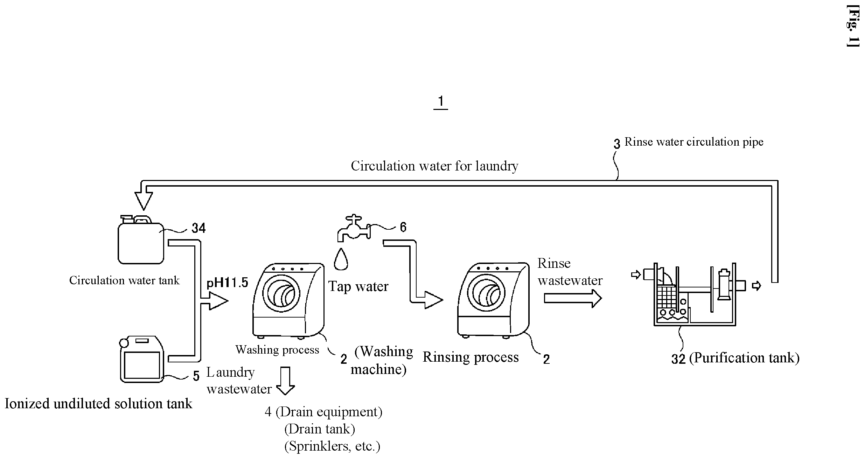

Fig. 1 is an explanation drawing showing the overview of the process of laundry system 1 according to the first embodiment.

The laundry system 1 in Fig. 1 is provided with a washing machine 2, purification tank 32, rinse water circulation pipe 3, circulation water tank 34 and ionized undiluted solution tank 5. Laundry system 1 may also be provided with drain equipment 4 as ancillary equipment.

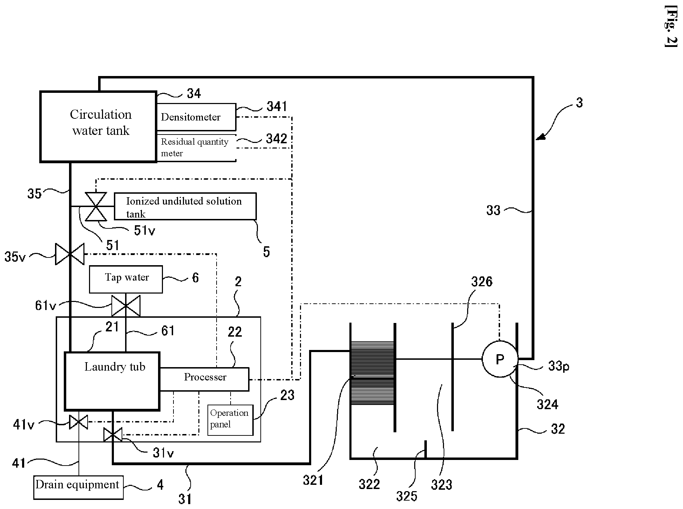

In Fig. 1, a drum-type washing machine (big drum) is illustrated as a washing machine 2. Instead, a two-tank type washing machine (washing machine with a laundry tub 21 (see Fig. 2) and a separate drying tub) or a vertical washing machine (beat-wash type washing machine) can be used.

In Fig. 1, two numbers of washing machine 2 are illustrated. This has been shown for convenience in explaining the washing and rinsing processes separately. In practice, a single washing machine performs the washing and rinsing processes, as shown in Fig. 2.

Although examples using alkaline ionized water as laundry water are described throughout the present embodiment, the water is not limited to alkaline ionized water if the laundry water is suitable for circulating the laundry wastewater or rinse wastewater to perform the washing and rinsing processes.

Preferably, alkaline ionized water with hydroxide ions is used as laundry water. This eliminates concerns about residual metal ions remaining on the garments as the hydroxide ions on the garments evaporate quickly, compared to washing with alkaline ionized water using metal ions, for example, sodium ions. Therefore, even if the rinsing process is omitted in other embodiments described later (combining washing and rinsing processes), there is no concern about residual metal ions in the garments.

Circulation water stored in the circulation water tank 34 is mixed with alkaline ionized water supplied from the ionized undiluted solution tank 5 as needed to achieve a predetermined concentration, such as laundry water adjusted to pH 11.5 and supplied to washing machine 2. Washing machine 2 performs the washing process. Laundry wastewater is discharged to drain equipment 4.

Drain equipment 4 may be a wastewater tank for the temporary storage of wastewater or a sprinkler installed on cultivated land. Laundry wastewater stored in the wastewater tank may be supplied to a sprinkler truck and sprayed on cultivated land. Since laundry wastewater is alkaline ionized water of approximately pH 11.5 and the dirt that dissolves in the washing process is biodegradable impurities such as food residue and sebum stains, laundry wastewater can be spread on cultivated land to improve soil and add extra fertilizer.

When the washing process finishes, washing machine 2 is filled with tap water (approximately pH 7) from tap 6. Washing machine 2 performs the rinsing process.

When the rinsing process finishes, the rinse wastewater is discharged. Rinse wastewater is supplied to purification tank 32. The rinse wastewater purified in purification tank 32 is temporarily stored in the circulation water tank 34 after passing through the rinse water circulation pipe 3 and then supplied again to the washing machine 2. If the concentration of alkaline ionized water is low, an appropriate volume of undiluted alkaline ionized water is supplied from the ionized undiluted solution tank 5, which mixes with the circulation water and is then supplied again to washing machine 2.

For sterilization or disinfection of the circulation water stored in circulation water tank 34, an ultraviolet irradiation device such as an ultraviolet irradiation lamp or ultraviolet LED may be installed inside circulation water tank 34, on the path of the rinse water circulation pipe 3 or on the connector between rinse water circulation pipe 3 and circulation water tank 34.

Fig. 2 is a block diagram showing the configuration of laundry system 1 according to the first embodiment.

As shown in Fig. 2, washing machine 2 is equipped with a laundry tub 21, processor 22 and operation panel 23.

Drainpipe 41 is connected to laundry tub 21.

Drainpipe 41 is a flow path that leads wastewater from laundry tub 21 to drain equipment 4.

Drainpipe 41 is provided with drain valve 41v (normally "Closed"). Drain valve 41v manages the flow of laundry wastewater by opening and closing according to the control signal from processor 22. A drain outlet lid that opens and closes the wastewater outlet of laundry tub 21 may be provided instead of drain valve 41v.

Processor 22 is electrically connected to the operation panel 23 and starts full control of laundry system 1 on receiving a "Start washing" input from operation panel 23.

Rinse water circulation pipe 3 consists of upstream circulation pipe 31, purification tank 32, downstream circulation pipe 33, circulation water tank 34, and circulation water supply pipe 35 along the flow of laundry wastewater.

Upstream circulation pipe 31 is a flow path that leads wastewater from laundry tub 21 to purification tank 32.

The upstream circulation pipe 31 is equipped with an upstream open/close valve 31v (normally "Closed").
Upstream open/close valve 31v opens and closes according to the control signal from processor 22.

Purification tank 32 is provided with filter 321, sedimentation tank 322, supernatant storage tank 323, drain outlet 324, lower partition wall 325 and upper partition wall 326.

The filter 321 is a device that removes solid substances in the wastewater that flows in from upstream circulation pipe 31.

Sedimentation tank 322 is a water tank that precipitates solid substances that could not be removed by filter 321.

The supernatant storage tank 323 is a water tank that stores the supernatant liquid of sedimentation tank 322.

Inside supernatant storage tank 323, an ascending water flow is formed from the sedimentation tank 322 by the lower partition wall 325 and the upper partition wall 326, while a descending water flow is formed along the upper partition wall 326 and an ascending water flow is further formed towards drain outlet 324. This facilitates convection in supernatant storage tank 323.

Purification tank pump 33P is installed near drain outlet 324, and purified laundry wastewater (hereinafter referred to as "Circulation water") is ejected from drain outlet 324 toward the downstream circulation pipe 33.

Purification tank pump 33P is operated by control signals from processor 22.

The downstream circulation pipe 33 is a flow path that leads circulation water ejected from drain outlet 324 of purification tank 32 to circulation water tank 34.

Circulation water flows through the downstream circulation pipe 33 and is temporarily stored in the circulation water tank 34.

Circulation water tank 34 is provided with densitometer 341 and residual quantity meter 342. The detection results of densitometer 341 and residual quantity meter 342 are sent to processor 22.

Circulation water supply pipe 35 is the flow path that leads circulation water supplied from circulation water tank 34 to laundry tub 21.

Circulation water supply pipe 35 is provided with circulation water supply valve 35v (normally "Closed"). Circulation water supply valve 35v opens and closes according to the control signal from the processor 22.

Ionized undiluted solution tank 5 stores the undiluted solution of alkaline ionized water.

Ionized undiluted solution feed pipe 51 is the flow path that guides the alkaline ionized water supplied from the ionized undiluted solution tank 5 to the circulation water supply pipe 35.

Ionized undiluted solution feed pipe 51 is provided with ionized water supply valve 51v (normally "Closed"). Ionized water supply valve 51v opens and closes according to the control signal from processor 22.

Tap water supply pipe 61 is the flow path that leads the tap water from tap 6 to laundry tub 21.

Tap water supply pipe 61 is equipped with the tap water supply valve 61v (normally "Closed"). Tap water supply valve 61v opens and closes according to the control signal from processor 22.

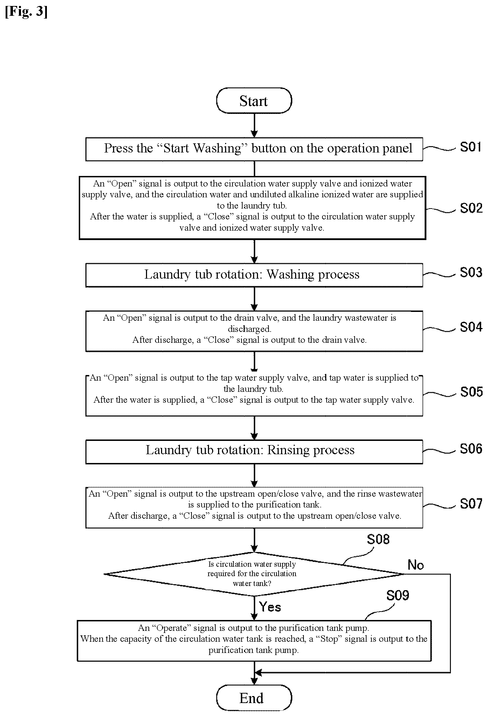

Fig. 3 is a flowchart showing the flow of processes of laundry system 1 according to the first embodiment.

When the user presses the "Start washing" button on the operation panel 23 (S01), processor 22 outputs an "Open" signal to the circulation water supply valve 35v and ionized water supply valve 51v, and circulation water is supplied to the laundry tub 21. After supplying water, processor 22 outputs a "Close" signal to the circulation water supply valve 35v and ionized water supply valve 51v (S02). Processor 22 may then obtain the value of densitometer 341 and determine the time to "Open" the ionized water supply valve 51v to adjust the pH of the laundry water.

Laundry tub 21 rotates, and the washing process is performed (S03).

When the washing process finishes, processor 22 outputs an "Open" signal to drain valve 41v, and laundry wastewater is discharged. After discharge, processor 22 outputs a "Close" signal to drain valve 41v (S04).

When the discharge is finished, processor 22 outputs an "Open" signal to tap water supply valve 61v, and tap water is supplied to laundry tub 21. After supplying water, processor 22 outputs a "Close" signal to tap water supply valve 61v (S05).

Laundry tub 21 rotates, and the rinsing process is performed (S06).

When the rinsing process is finished, processor 22 outputs an "Open" signal to upstream open/close valve 31v, and rinse wastewater is supplied to purification tank 32. After discharge, processor 22 outputs a "Close" signal to the upstream open/close valve 31v (S07). Rinse wastewater is purified while it flows through purification tank 32, and circulation water is generated.

Processor 22 determines whether circulation water is to be supplied to circulation water tank 34 based on the detection results of residual quantity meter 342. If "Yes" (S08: Yes), processor 22 outputs an "Operate" signal to purification tank pump 33P. Purification tank pump 33P ejects circulation water into downstream circulation pipe 33, which is supplied to the circulation water tank 34. When circulation water tank 34 is full, processor 22 outputs a "Stop signal" to purification tank pump 33P (S09). If "No" (S08:No), exits the process.

Laundry system 1, according to the first embodiment, is characterized by being equipped with washing machine 2 and rinse water circulation pipe 3. Washing machine 2 is equipped with laundry tub 21 that is supplied with alkaline ionized water to perform washing. Laundry tub 21 performs the washing and rinsing processes, and the rinse wastewater discharged in the rinsing process is supplied to laundry tub 21 through rinse water circulation pipe 3 and is again used in the washing process.

According to laundry system 1 of the first embodiment, since the rinse wastewater generated in the rinsing process can be reused in the subsequent washing process, water resources can be conserved.

Preferably, the circulation pipe should be equipped with a purification tank 32.

This allows circulation water, which is purified by removing the solid substances from rinse wastewater and sedimentation of impurities present in the water, to be reused in a new washing process.

### <Second embodiment>

The second embodiment comprises a laundry system wherein the laundry wastewater (alkaline ionized water that is reused) discharged after the washing process is circulated and reused in the laundry process. The same symbols are assigned to the parts in the description of the second embodiment that overlap with the first embodiment, and duplicate descriptions have been omitted.

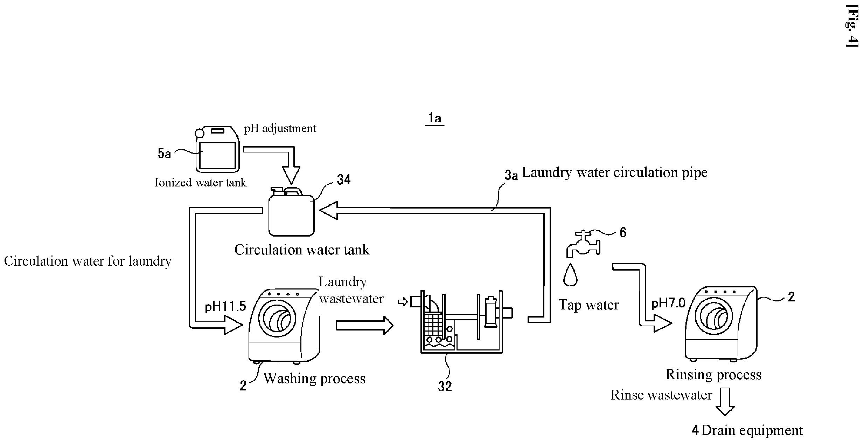

Fig. 4 is an explanation drawing showing an overview of the process of laundry system 1a according to the second embodiment.

Laundry system 1a, shown in Fig. 4, is provided with washing machine 2, purification tank 32, laundry water circulation pipe 3a, circulation water tank 34 and ionized undiluted solution tank 5. Laundry system 1 may also be provided with drain equipment 4 as ancillary equipment.

Even in Fig. 4, two numbers of washing machine 2 are illustrated. This has been shown for convenience in explaining the washing and rinsing processes separately. In practice, a single washing machine 2 performs the washing and rinsing processes.

Washing machine 2 is supplied with circulation water (alkaline ionized water that is reused, and the circulation water tank corresponds to the laundry water tank.) stored in the circulation water tank 34. When the laundry wastewater in circulation water tank 34 is inadequate, alkaline ionized water adjusted to a specified concentration, for example, pH 11.5, is supplied to circulation water tank 34 from ionized undiluted solution tank 5 as needed. Washing machine 2 performs the washing process. Laundry wastewater is supplied to purification tank 32. The laundry wastewater purified in purification tank 32 is temporarily stored in circulation water tank 34 after passing through the laundry water circulation pipe 3a and then supplied again to washing machine 2.

When the washing process finishes, washing machine 2 is filled with tap water (approximately pH 7) from tap 6. Washing machine 2 performs the rinsing process.

When the rinsing process finishes, rinse wastewater is discharged to drain equipment 4.

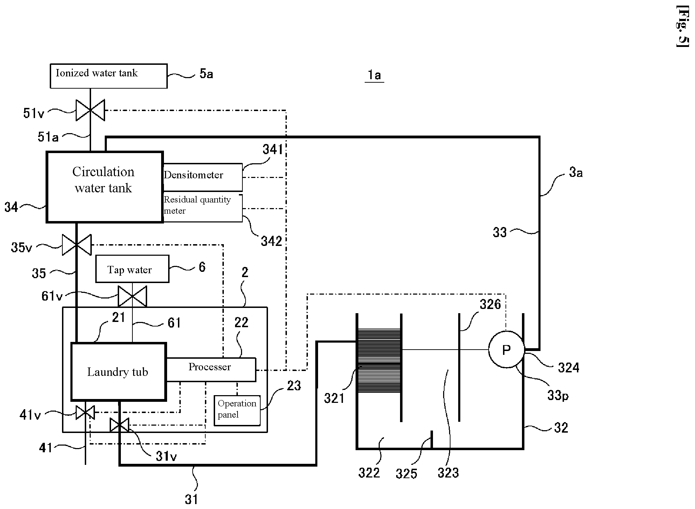

Fig. 5 is a block diagram showing the configuration of laundry system 1a according to the second embodiment.

The difference with laundry system 1, according to the first embodiment, is that instead of the ionized undiluted solution tank 5, ionized water tank 5a that stores ionized water with the pH already adjusted is provided, and ionized water is supplied through the ionized water supply pipe 51a. Ionized water tank 5a stores alkaline ionized water that is almost at a specified concentration (for example, pH 11.5).

Therefore, the difference with rinse water circulation pipe 3 of the first embodiment is that the undiluted alkaline ionized water (for example, pH 12 or higher) is stored in the ionized undiluted solution tank 5, and the reused rinse wastewater is circulated to dilute the undiluted alkaline ionized water.

Measures are needed as there is a possibility of reaction heat generation during dilution with a configuration that dilutes the undiluted alkaline ionized water. However, using ionized water tank 5a instead of ionized undiluted solution tank 5 according to this embodiment, ionized water tank 5a can store alkaline ionized water that can be directly used as laundry water, and the above measures are not required.

Therefore, in the second embodiment, a densitometer 341 is not required, and ionized water supply valve 51v may be opened and closed according to the residual quantity in the circulation water tank 34.

A configuration is illustrated in Fig. 5 as a suitable example wherein densitometer 341 is installed in circulation water tank 34 to monitor the concentration of circulation water in the circulation water tank 34.

Since the rest of the configuration is the same as the first embodiment, duplicate explanations are omitted.

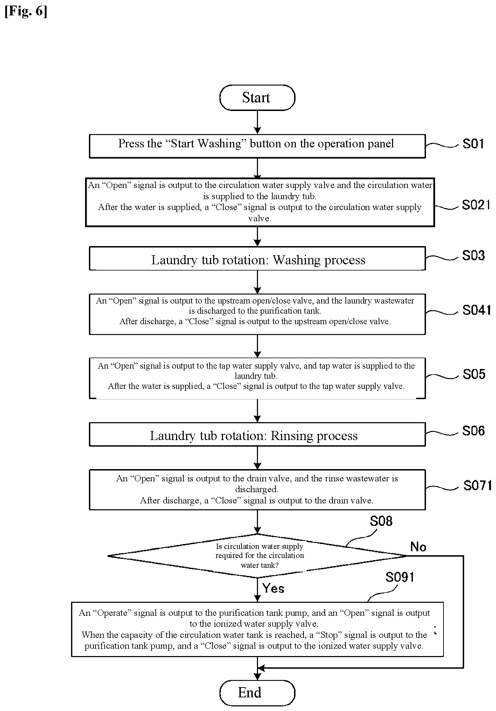

Fig. 6 is a flowchart showing the flow of processes of laundry system 1a according to the second embodiment. Duplicate explanations for the same steps as the first embodiment are omitted.

The difference from the process flow of laundry system 1 in the first embodiment is that in step S02, processor 22 outputs an "Open" signal to the circulation water supply valve 35v and does not output an "Open" signal to the ionized water supply valve 51v. When the supply of circulation water (alkaline ionized water that has been reused) to laundry tub 21 is completed, processor 22 outputs a "Close" signal to the circulation water supply valve 35v (S021).

When the washing process (S03) is finished, processor 22 outputs an "Open" signal to upstream open/close valve 31v, and laundry wastewater is supplied to purification tank 32. After discharge, processor 22 outputs a "Close" signal to the upstream open/close valve 31v (S041). Laundry wastewater is purified while it flows through purification tank 32, and circulation water is generated.

When tap water is supplied (S05), and the rinsing process is finished (S06), processor 22 outputs an "Open" signal to drain valve 41v, and rinse wastewater is discharged. After discharge, processor 22 outputs a "Close" signal to drain valve 41v (S071).

Processor 22 determines whether alkaline ionized water is to be supplied to circulation water tank 34 based on the detection results of residual quantity meter 342. If "Yes" (S08: Yes), processor 22 outputs an "Operate" signal to purification tank pump 33P. Purification tank pump 33P ejects circulation water into downstream circulation pipe 33, which is supplied to the circulation water tank 34. If the supply is still inadequate, an "Open" signal is output to ionized water supply valve 51v, and circulation water tank 34 is replenished with alkaline ionized water. After completion of replenishment, a "Close" signal is output to ionized water supply valve 51v (S091).

Laundry system 1a, according to the second embodiment, is characterized by being equipped with washing machine 2 and laundry water circulation pipe 3a. Washing machine 2 is equipped with laundry tub 21 that is supplied with alkaline ionized water to perform washing. Laundry tub 21 performs the washing and rinsing processes, and the laundry wastewater discharged in the washing process is supplied to laundry tub 21 through laundry water circulation pipe 3a and is again used in the washing process.

According to laundry system 1 of the second embodiment, the laundry wastewater generated in the washing process can be reused in the next washing process. This allows washing to be performed while conserving alkaline ionized water, which is comparatively expensive.

Preferably, the circulation pipe should be equipped with a purification tank 32.

This allows the circulation water, which is purified by removing the solid substances from laundry wastewater and sedimentation of impurities present in the water, to be reused in a new washing process.

### <Third embodiment>

The third embodiment comprises a laundry system wherein laundry wastewater (alkaline ionized water that is reused) discharged after the washing process is circulated and reused in the laundry process, and rinse wastewater discharged after the rinsing process is circulated and reused in the rinsing process. The same symbols are assigned to the parts in the description of the third embodiment that overlap with the first and second embodiment, and duplicate descriptions have been omitted.

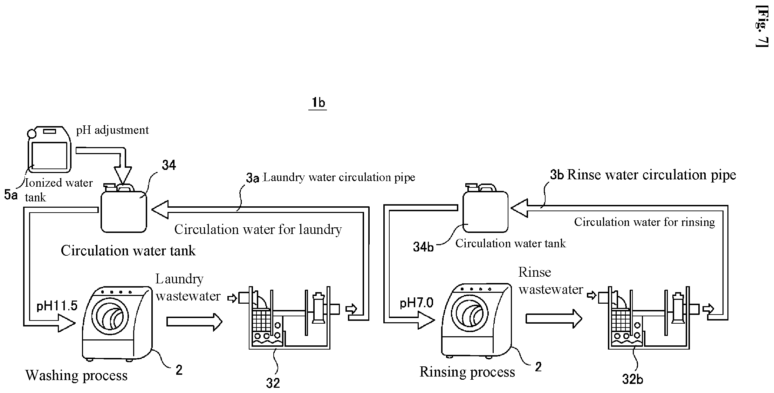

Fig. 7 is an explanation drawing showing an overview of the process of laundry system 1b according to the third embodiment.

Laundry system 1b, shown in Fig. 7, has laundry water circulation pipe 3a and rinse water circulation pipe 3b connected to washing machine 2.

Even in Fig. 7, two numbers of washing machine 2 are illustrated. This has been shown for convenience in explaining the washing and rinsing processes separately. In practice, a single washing machine 2 performs the washing and rinsing processes.

Since the configuration of laundry water circulation pipe 3a is the same as the second embodiment, the description is omitted.

Rinse water circulation pipe 3b differs in that circulation water tank 34b is added to rinse water circulation pipe 3 of the first embodiment, and downstream of circulation water tank 34b is connected to laundry tub 21.

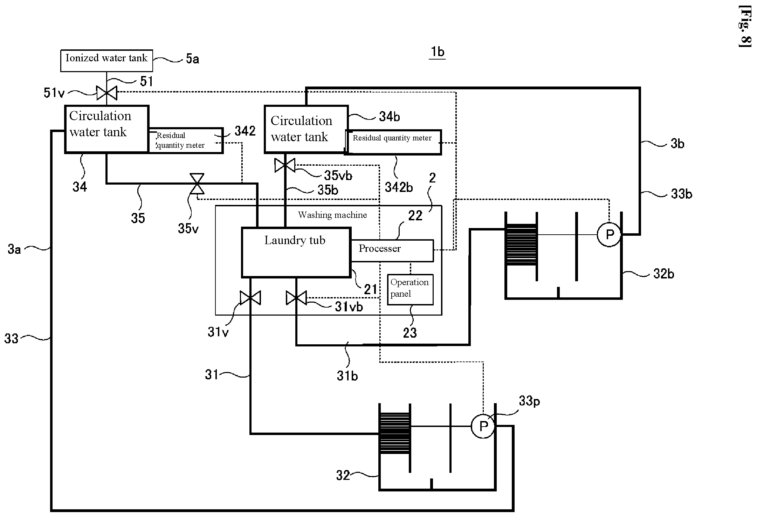

Fig. 8 is a block diagram showing the configuration of the laundry system 1b according to the third embodiment. Each component on rinse water circulation pipe 3b shown in Fig. 8 is the same as the components on rinse water circulation pipe 3, the reference symbols of the components on the rinse water circulation pipe 3 are shown with a subscript "b" for each component on rinse water circulation pipe 3b in Fig. 8 to distinguish the components on rinse water circulation pipe 3b from the components on laundry water circulation pipe 3a.

Laundry wastewater purified by purification tank 32 is supplied to the circulation water tank 34 by laundry water circulation pipe 3a. Next, the wastewater is supplied to laundry tub 21 for the washing process. Circulation water for washing that circulates in laundry water circulation pipe 3a is alkaline ionized water of approximate pH 11.5.

The rinse wastewater purified in purification tank 32b is supplied by the rinse water circulation pipe 3b to the circulation water tank 34b and is supplied to laundry tub 21 for the rinsing process. Circulation water for rinsing that circulates in rinse water circulation pipe 3b is alkaline ionized water of about pH 7.0.

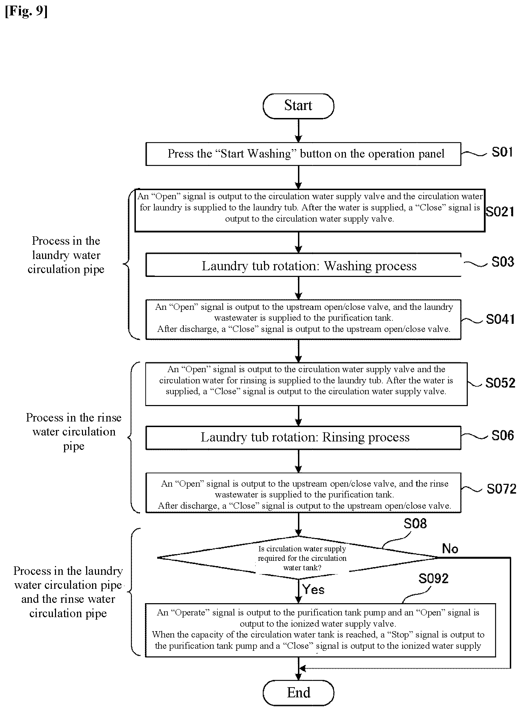

Fig. 9 is a flowchart showing the flow of processes of laundry system 1b according to the third embodiment. Duplicate explanations are omitted for the same steps as in the first and second embodiments.

When the "Start Washing" button is pressed in step S01, processor 22 outputs the "Open" signal to the circulation water supply valve 35v on laundry water circulation pipe 3a. When the supply of circulation water (alkaline ionized water that has been reused) to laundry tub 21 is finished, processor 22 outputs a "Close" signal to the circulation water supply valve 35v (S021).

The washing process (S03) is executed and on finishing, processor 22 outputs an "Open" signal to upstream open/close valve 31v, and laundry wastewater is supplied to purification tank 32. After discharge, processor 22 outputs a "Close" signal to the upstream open/close valve 31v (S041). Laundry wastewater is purified while it flows through purification tank 32, and circulation water is generated.

An "Open" signal is output to circulation water supply valve 35vb on rinse water circulation pipe 3b as preparation for the rinsing process; the rinse circulation water is supplied to laundry tub 21, and a "Close" signal is output to circulation water supply valve 35vb after the water is supplied (S052).

Laundry tub 21 rotates and executes the rinsing process (S06), and on finishing, processor 22 outputs a "Close" signal to upstream open/close valve 31vb, and rinse wastewater is supplied to purification tank 32b. After discharge, processor 22 outputs a "Close" signal to upstream open/close valve 31vb (SO72). Laundry wastewater is purified while it flows through purification tank 32b, and circulation water is generated.

Processor 22 determines whether each circulation water tank 34, 34b is required to be replenished based on the detection results of residual quantity meters 342, 342b installed in the circulation water tank 34, which stores circulation water for washing and circulation water tank 34b, which stores circulation water for rinsing. If "Yes" (S08: Yes), processor 22 appropriately outputs the "Operate" signal to purification tank pumps 33P, 33Pb and the "Open" signal to ionized water supply valve 51v and performs replenishment. After replenishment, it outputs a "Stop" signal to purification tank pumps 33P, 33Pb, and a "Close" signal to ionized water supply valve 51v (S092). Next, if step S08 is "No" (S08: No), exit the process.

Laundry system 1b, according to the third embodiment, is characterized by being equipped with laundry tub 21, laundry water circulation pipe 3a, and rinse water circulation pipe 3b. Washing machine 2 is equipped with laundry tub 21 that is supplied with alkaline ionized water to perform washing. Laundry tub 21 performs the washing and rinsing processes, and the laundry wastewater discharged in the washing process is supplied to laundry tub 21 through a laundry water circulation pipe and is again used in the washing process. Rinse wastewater discharged from the rinsing process is supplied to laundry tub 21 through the rinse water circulation pipe 3b and is again used in the rinsing process.

According to laundry system 1b of the third embodiment, laundry wastewater generated in the washing process can be reused in the next washing process and rinse wastewater produced in the rinsing process can be reused in the next rinsing process. This allows washing to be performed while conserving alkaline ionized water, which is comparatively expensive, and rinsing is also performed, saving tap water.

According to laundry system 1b of the third embodiment, since laundry wastewater and rinse wastewater are not discharged from laundry system 1b, wastewater treatment is not necessary, and the environmental load is reduced.

### <Fourth embodiment>

The fourth embodiment comprises of a laundry system in which laundry wastewater is circulated as circulation water for washing and rinse wastewater is circulated as circulation water for rinsing in a single washing machine. The same symbols are assigned to the parts in the description of the fourth embodiment that overlap with the first to third embodiments, and duplicate descriptions have been omitted.

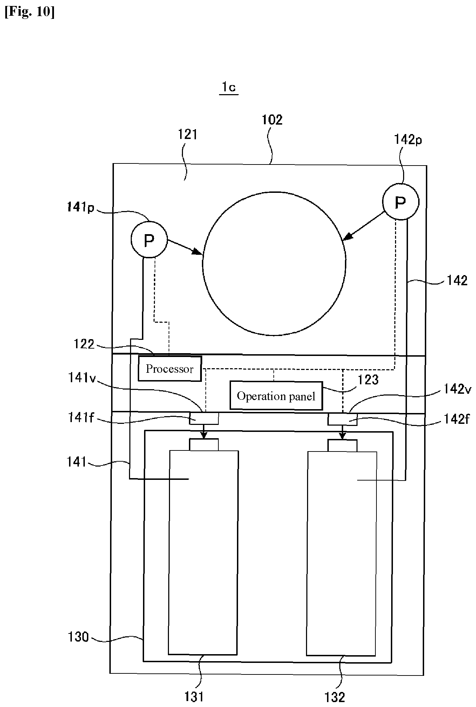

Fig. 10 is a schematic diagram of laundry system 1c according to the fourth embodiment.

Laundry system 1c, according to the fourth embodiment, is installed (provided) in a single washing machine 102. Washing machine 102 is equipped with laundry tub 121 and bottle cartridge 130.

Bottle cartridge 130 is installed on the washing machine 102 such that the cartridge can be attached and removed.

Bottle cartridge 130 includes ionized water bottle 131, which collects alkaline ionized water (pH 11.5), and rinse water bottle 132, which collects tap water for rinsing (pH 7.0).

Washing machine 102 is equipped with laundry tub 121, processor 122, operation panel 123, laundry water circulation pipe 141 and rinse water circulation pipe 142.

Laundry water circulation pipe 141 connects ionized water bottle 131 to laundry tub 121.

First pump 141p is installed on laundry water circulation pipe 141.

First drain valve 141v and first filter 141f are installed at the bottom of laundry tub 121.

Rinse water circulation pipe 142 connects rinse water bottle 132 to laundry tub 121.

The second pump 142p is installed on rinse water circulation pipe 142.

The second drain valve 142v and second filter 142f are installed at the bottom of laundry tub 121.

Processor 122 executes the washing and rinsing processes according to the "Start washing" signal from operation panel 123.

Processor 122 controls the open/close of the first pump 141p, second pump 142p, first drain valve 141v and second drain valve 142v.

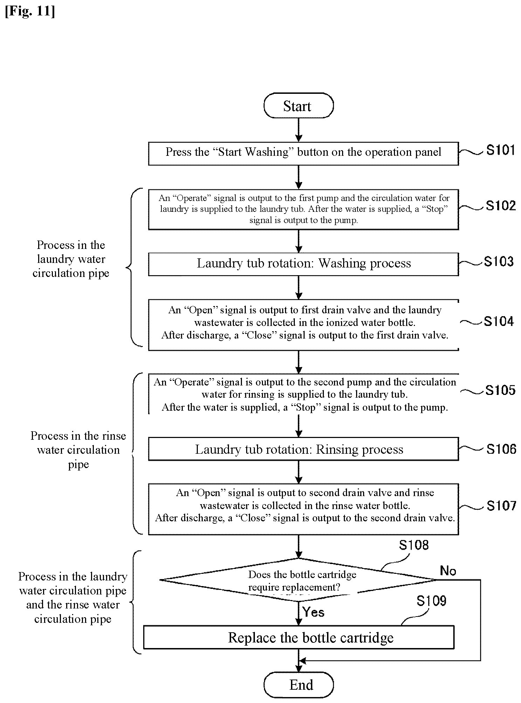

Fig. 11 is a flowchart showing the flow of processes of laundry system 1c according to the fourth embodiment.

When the user presses the "Start Washing" button on the operation panel 123 (S101), processor 122 outputs an "Operate" signal to first pump 141p on laundry water circulation pipe 141 and ionized water is supplied from ionized water bottle 131 to laundry tub 121. After supplying water, processor 122 outputs a "Stop" signal to first pump 141p (S102).

Laundry tub 21 rotates, and the washing process is performed (S103).

When the washing process is finished, processor 122 outputs an "Open" signal to the first drain valve 141v on laundry water circulation pipe 141, and laundry wastewater is discharged. Laundry wastewater passes through the first filter 141f and is collected in the ionized water bottle 131. After discharge, a "Close" signal is output to the first drain valve 141v (S104).

On transitioning to the rinsing process, processor 122 outputs an "Operate" signal to the second pump 142p on rinse water circulation pipe 142 and rinse water is supplied from rinse water bottle 132 to the laundry tub 121. After supplying water, processor 122 outputs a "Stop" signal to the first pump 141p (S105).

Laundry tub 21 rotates, and the rinsing process is performed (S106).

When the rinsing process is finished, processor 122 outputs an "Open" signal to the second drain valve 142v on rinse water circulation pipe 142, and rinse wastewater is discharged. Rinse wastewater passes through a second filter 142f and is collected in the rinse water bottle 132. After draining, a "Close" signal is output to the second drain valve 142v (S107).

If bottle cartridge 130 is to be replaced (S108: Yes), bottle cartridge 130 is replaced (S109). Next, if replacement is "Not required" (S108: No), exit the process.

Laundry system 1c, according to the fourth embodiment, is characterized by being equipped with a washing machine 102, bottle cartridge 130, laundry water circulation pipe 141 and rinse water circulation pipe 142. Washing machine 102 is equipped with laundry tub 121 for washing by supplying alkaline ionized water, wherein laundry tub 121 performs washing and rinsing processes, and the bottle cartridge 130 comprises of ionized water bottle 131 that collects the alkaline ionized water and rinse water bottle 132 that collects rinse water, and in the washing process, the alkaline ionized water supplied from the ionized water bottle 131 is supplied to laundry tub 121 through the laundry water circulation pipe 141, and the laundry wastewater discharged during the washing process is collected in the ionized water bottle 131, whereas in the rinsing process, rinse water supplied from rinse water bottle 132 is supplied to laundry tub 121 through the rinse water circulation pipe 142, and the rinse wastewater discharged from the rinsing process is collected in rinse water bottle 132.

According to washing machine 102, which implements laundry system 1c of the fourth embodiment, the laundry wastewater generated in the washing process can be reused in the next washing process and rinse wastewater produced in the rinsing process can be reused in the next rinsing process. This allows washing to be performed while conserving alkaline ionized water, which is comparatively expensive, and rinsing is also performed saving tap water.

Ionized water bottle 131 and rinse water bottle 132 are housed in bottle cartridge 130, and alkaline ionized water and rinse water can be replenished by replacing bottle cartridge 130. Therefore, while conventional washing machines require tap water for water supply, detergent, placing the washing machine on a waterproof pan and connecting a drain hose to a drain outlet, according to the present embodiment, a water supply or drain outlet is not required at the location at which washing machine 102 is placed because the circulation paths for laundry water and rinse water are closed between washing machine 102 and bottle cartridge 130. Therefore, the freedom in placement location at which washing machine 102 can be placed can be increased.

In addition to replacing bottle cartridge 130, the system can be configured so that only ionized water bottle 131 or rinse water bottle 132 can be replaced.

### <Fifth embodiment>

The fifth embodiment comprises a washing machine equipped with a dryer wherein the water produced during the drying process of the dryer when washing and rinsing are performed with alkaline ionized water is used in the washing or rinsing processes. More specifically, this is an embodiment in which water adhering to the heat exchanger in the part that warms the compressed refrigerant is used to supply water when the heat pump mounted in the dryer produces warm air for drying. The same symbols are assigned to the parts in the description of the fifth embodiment that overlap with the first to fourth embodiments, and duplicate descriptions have been omitted.

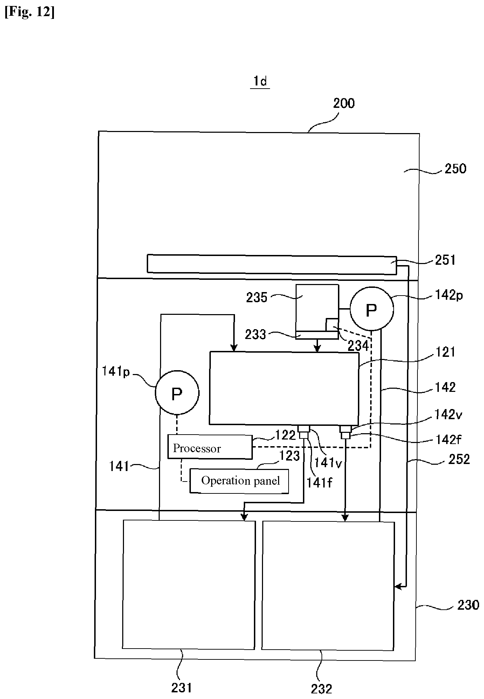

Fig. 12 is a schematic diagram of laundry system 1d according to the fifth embodiment.

Laundry system 1d, according to the fifth embodiment, is implemented with a washing machine 200 equipped with a dryer 250.

Washing machine 200 is equipped with a laundry tub 121, processor 122, an operation panel 123, a laundry water circulation pipe 141, a rinse water circulation pipe 142, a water replenishment pipe 252, a laundry pan 230 and a dryer 250.

Laundry pan 230 includes ionized water tank 231, which stores alkaline ionized water (approximately pH 11.5) and rinse water tank 232, which collects tap water for rinsing (pH 7.0).

In laundry water circulation pipe 141, alkaline ionized water (laundry water) stored in the ionized water tank 231 is combined by first pump 141p and supplied to laundry tub 121.

The alkaline ionized water used in the washing process passes through the first drain valve 141v, and the first filter 141f at the bottom of laundry tub 121 after the washing process is finished and flows into the ionized water tank 231.

Dryer 250 is equipped with discharge mechanism 251 that discharges the water produced when the garments are dried to outside dryer 250.

Water replenishment pipe 252 connects discharge mechanism 251 and rinse water tank 232. Water discharged when the drying process is performed with dryer 250 is supplied to rinse water tank 232 through water replenishment pipe 252. Rinse water can be generated and replenished with washing machine 200 by replenishing rinse water tank 232 with water discharged during the drying process.

Water replenishment pipe 252 connects discharge mechanism 251 and rinse water tank 232. Water discharged when the drying process is performed with dryer 250 is supplied to rinse water tank 232 through water replenishment pipe 252. Rinse water can be generated and replenished with washing machine 200 by replenishing rinse water tank 232 with water discharged during the drying process.

Rinse water tank 232, second pump 142p, tank before the filter 235 and filter 233 are arranged on rinse water circulation pipe 142 from upstream to downstream.

Since the water flow-rate through filter 233 is slower than the water flow-rate through rinse water circulation pipe 142, water is temporarily stored in the tank before filter 235 and passed through filter 233. That is, the tank before filter 235 functions as a buffer.

Tank before the filter 235, is provided with ultraviolet LED 234 for sterilization or disinfection.

Rinse water is drawn from the rinse water tank 232 by second pump 142p, temporarily stored in the tank before the filter 235 and disinfected by ultraviolet rays. The water is then filtered by filter 233 and flows into laundry tub 121.

After the rinsing process is finished, rinse water in laundry tub 121 passes through the second drain valve 142v and second filter 142f at the bottom of laundry tub 121 and flows into the rinse water tank 232.

According to washing machine 200, which implements the laundry system 1d of the fifth embodiment, water generated by the drying process in dryer 250 is supplied to rinse water tank 232. If an adequate volume of wastewater is discharged from dryer 250, then there is no need for supply of water from outside washing machine 200, or the supply frequency can be reduced.

Specifically, washing is easier to perform using washing machine 200, in an environment where freshwater is difficult to secure, by reusing wastewater discharged from dryer 250.

Moreover, the high pH of laundry water reduces the breeding of bacteria, whereas the breeding of bacteria is a concern in the rinse water, having a neutral nature. In this regard, sterilization with ultraviolet LED 234 keeps the rinse water clean. As a result, it also contributes to the cleanliness of the laundry tub 121, rinse water tank 232 and rinse water circulation pipe 142.

Also, as in the fourth embodiment, the laundry wastewater generated in the washing process can be reused in the next washing process and rinse wastewater produced in the rinsing process can be reused in the next rinsing process. This allows washing to be performed while conserving alkaline ionized water, which is comparatively expensive, and rinsing is also performed saving tap water.

According to the present embodiment, a water supply or drain outlet is not required at the location at which washing machine 200 is installed because the circulation paths of laundry water and rinse water are closed between washing machine 200 and laundry pan 230. Therefore, the freedom in placement location at which washing machine 200 can be placed can be increased.

In the above explanation, water generated from dryer 250 is reused in the rinsing process; the water may be supplied to the ionized water tank 231 through water replenishment pipe 252. In this case, since a drop in pH is expected due to the water supply, supplying an undiluted solution of alkaline ionized water from the source as appropriate is advisable.

### <Sixth embodiment>

The sixth embodiment comprises a water generator installed in a washing machine that generates water from water vapor in the air, and the generated water is used in the washing or rinsing process when alkaline ionized water is circulated to perform washing and rinsing. More specifically, this is an embodiment in which water is generated from the air and used as supply water using an air conditioning system that includes a heat pump, heat exchanger and refrigerant as a water generator. The same symbols are assigned to the parts in the description of the sixth embodiment that overlap with the first to fifth embodiments, and duplicate descriptions have been omitted.

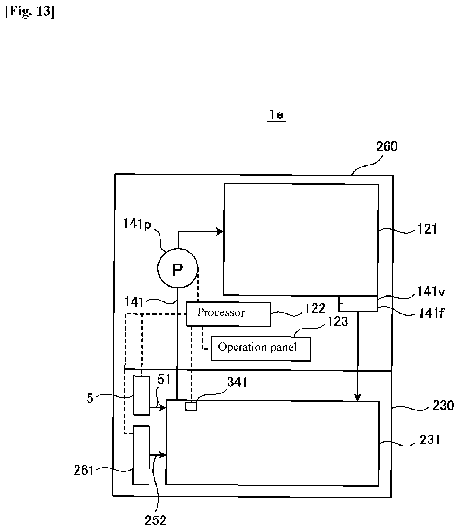

Fig. 13 is a schematic diagram of laundry system 1e according to the sixth embodiment.

Laundry system 1e, according to the sixth embodiment, is implemented with washing machine 260 equipped with water generator 261 that includes a heat pump, heat exchanger and refrigerant.

Washing machine 260 is equipped with laundry tub 121, processor 122, operation panel 123, laundry water circulation pipe 141, first pump 141p, first drain valve 141v, first filter 141f, laundry pan 230, ionized water tank 231, densitometer 341, water replenishment pipe 252, water generator 261, ionized undiluted solution tank 5 and ionized undiluted solution feed pipe 51.

Water generator 261 produces water from water vapor present in the atmosphere through the dehumidification process and supplies water to ionized water tank 231.

Processor 122 monitors the concentration of alkaline ionized water stored in the ionized water tank 231 detected by densitometer 341 to ensure that the concentration of alkaline ionized water does not drop below a predetermined concentration.

When processor 122 determines that the concentration is below a predetermined level, the ionized undiluted solution is supplied to the ionized water tank 231. This ensures that even if the concentration of alkaline ionized water in ionized water tank 231 drops due to the water supply from water generator 261, the pH is maintained at a predetermined value, and detergency and the sterilizing property of laundry water are maintained.

Washing machine 260 is characterized by being equipped with laundry water circulation pipe 141 and not equipped with rinse water circulation pipe 142. Washing and rinsing processes are carried out only with alkaline ionized water. Water may be discharged to the ionized water tank 231 after the washing process is finished, and alkaline ionized water may be again supplied through the laundry water circulation pipe 141 to laundry tub 121 for performing the rinsing process.

Alternatively, supply water to laundry tub 121 of alkaline ionized water once, rotate laundry tub 121 once, discharge to the ionized water tank 231 and combine the washing and rinsing processes

According to washing machine 260, which implements the laundry system 1e of the sixth embodiment, water generator 261 generates water from the atmosphere and supplies it to the ionized water tank 231. Washing using washing machine 260 is easier even in an environment where freshwater is difficult to secure.

The environmental load can be reduced as wastewater from washing machine 260 is not discharged. Environmental pollution caused by microplastics being discharged into rivers and oceans from laundry wastewater and rinse water can be prevented. Microplastics in laundry water and rinse water may be collected by installing filters, which filter microplastics, on the circulation path to prevent or reduce the release of microplastics into the environment.

If alkaline ionized water containing hydroxide ions is used, alkaline ionized water adhered to the garments evaporates with water during the drying process. Therefore, since rinsing with freshwater is no longer necessary, washing and rinsing processes can be combined and can contribute to the reduction of time and power required for laundry.

According to the present embodiment, a water supply or drain outlet is not required at the location at which washing machine 260 is installed since the circulation path for alkaline ionized water is closed inside washing machine 260. Therefore, the freedom in placement location at which washing machine 260 can be placed can be increased.

In the above explanation, water generated by water generator 261 is supplied to the ionized water tank 231; in a washing machine (for example, washing machine 200 according to the fifth embodiment) equipped with rinse water tank 232, water generated by water generator 261 can be supplied to rinse water tank 232. That is, dryer 250 is one embodiment of a water generator.

### <Seventh embodiment>

The seventh embodiment is a laundry system 1f equipped with a laundry water circulator; for example, the drain outlet of an existing washing machine is connected to the water supply inlet of the laundry water circulator, and the drain outlet of the laundry water circulator is connected to the water supply inlet of the washing machine and is a laundry system with zero discharge to the sewage pipes. The existing washing machine can be a commercial washing machine with several laundry tubs, such as a coin-operated laundry. The term "laundry water" in this embodiment is a generic term for water necessary for washing, including laundry water and rinse water.

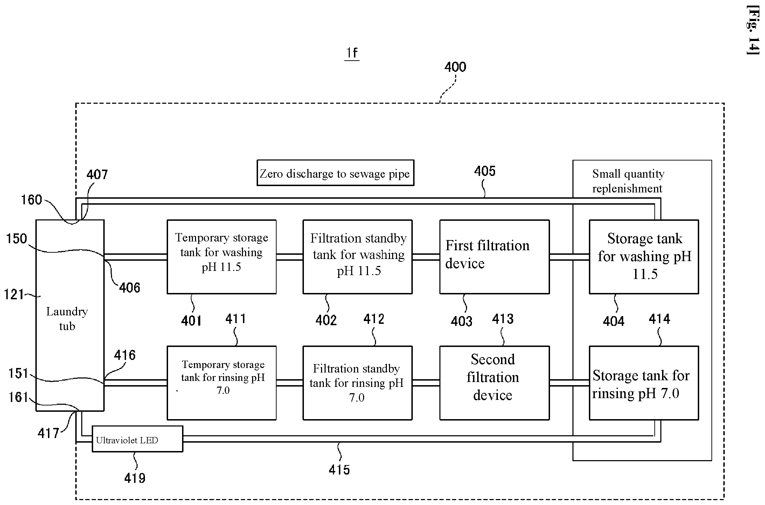

Fig. 14 is a schematic diagram of laundry system 1f according to the seventh embodiment.

Laundry system 1f, according to the seventh embodiment, consists of a laundry water circulator 400 connected to laundry tub 121 of an existing washing machine.

Laundry water circulator 400 is broadly equipped with laundry water circulation pipe 405, which is used to reuse laundry water formed from alkaline ionized water and rinse water circulation pipe 415, used for reusing rinse water, which uses water of around pH 7.0.

The first inflow port 406 of laundry water circulation pipe 405 is connected to the first drain outlet 150 of laundry tub 121.

The first discharge outlet 407 of laundry water circulation pipe 405 is connected to the first water supply inlet 160 of laundry tub 121.

The second inflow port 416 of rinse water circulation pipe 415 is connected to the second drain outlet 151 of laundry tub 121.

The second drain outlet 417 of rinse water circulation pipe 415 is connected to the second water supply inlet 161 of laundry tub 121.

The first drain outlet 150 and second drain outlet 151 of laundry tub 121 are mentioned separately in Fig. 14 for convenience of explanation. In practice, the opening of first drain outlet 150 and second drain outlet 151 can be formed into one and switched to either the laundry water circulation pipe 405 or rinse water circulation pipe 415 in laundry water circulator 400.

Similarly, in Fig. 14, the first water supply inlet 160 and the second water supply inlet 161 of laundry tub 121 are mentioned separately for convenience of explanation, but they may be formed by a single opening.

A temporary storage tank for washing 401, filtration standby tank for washing 402, first filtration device 403, and storage tank for washing 404 are placed on laundry water circulation pipe 405 from upstream (first inflow port 406) to downstream (first discharge outlet 407).

A temporary storage tank for rinsing 411, filtration standby tank for rinsing 412, second filtration device 413, and storage tank for rinsing 414 are placed on rinse water circulation pipe 415 from upstream (second inflow port 416) to downstream (second discharge port 417)

In addition, rinse water circulation pipe 415 is provided with an ultraviolet LED 419. In Fig. 14, the LED is placed just before the second drain outlet 417. With this, the hygiene level of rinse water is improved by sterilization using ultraviolet rays just before supply to the laundry tub 121. Ultraviolet LED 419 is a form of ultraviolet irradiation device, and the installation location may be one or more of the following: Temporary storage tank for rinsing 411, filtration standby tank for rinsing 412, or storage tank for rinsing 414. It may be installed along the flow path pipe of rinse water circulation pipe 415 like ultraviolet LED 419.

When using the same water for laundry multiple times, high-performance filtration is necessary, and filtration takes time. In the present embodiment, the filtered laundry water is stored in the storage tank for washing 404, and the filtered rinse water is stored in the storage tank for rinsing 414 in preparation for the next wash.

With this, the time required for washing is the same as the conventional method since laundry water and rinse water required for the next wash are supplied to laundry tub 121 while performing high-performance filtration. Therefore, alkaline ionized water and rinse water can be circulated and used many times while performing laundry smoothly.

As a result of high-performance filtration, the flow rate when passing through first filtration device 403 and second filtration device 413 is slower than the flow rate when laundry water and rinse water are discharged from laundry tub 121.

Therefore, by providing a filtration standby tank for washing 402 and filtration standby tank for rinsing 412 just before first filtration device 403 and second filtration device 413, water can be temporarily stored in the filtration standby tank for washing 402 and filtration standby tank for rinsing 412 and the difference in the inflow rate to the temporary storage tank for washing 401 and temporary storage tank for rinsing 411 and flow-rate through first filtration device 403 and second filtration device 413 can be absorbed.

Although the filtration standby tank for washing 402 and filtration standby tank for rinsing 412 have been provided in Fig. 14, the timing at which alkaline ionized water is discharged from, and water is supplied to laundry tub 121 and rinse water is discharged and water is supplied to laundry tub 121 are different (timing is exclusive).

The filtration standby tank for washing 402 and filtration standby tank for rinsing 412 both function as buffers to adjust the flow rate of the first filtration device 403 and the second filtration device 413.

Instead of providing a separate filtration standby tank for washing 402 and filtration standby tank for rinsing 412, a filtration standby tank (common filtration standby tank) that is shared by alkaline ionized water and rinse water can be provided, and a flow path switching valve may be installed between the common filtration standby tank, and first filtration device 403 and second filtration device 413.

When alkaline ionized water is flowing into the common filtration standby tank, the flow path is switched by the flow path switching valve so that the flow is to first filtration device 403, and when rinse water is flowing into the common filtration standby tank, the flow path is switched by the flow path switching valve so that the flow is to second filtration device 413.

Since a single filtration standby tank is sufficient, the cost can be lowered by reducing the number of components, and a more compact laundry water circulator can be expected.

High-performance filtration is necessary since the same water is used for washing multiple times; as a result, the problem of filtration taking longer is common to all embodiments, providing a configuration with a filtration standby tank upstream of the alkaline ionized water and rinse water filtration device and filter in all embodiments is preferred.

This ensures cleanliness by using a high-performance filtration device and filter for hygiene, which is a concern when circulating the same alkaline ionized water and rinse water in all the embodiments. Wastewater from laundry tub 121 is stored in a temporary storage tank for washing 401 and a temporary storage tank for rinsing 411 to avoid stagnation of wastewater discharged from laundry tub 121 by high-performance filtration while performing washing smoothly, enabling alkaline ionized water and rinse water to be circulated and used hygienically.

### <Eight embodiment>

The eighth embodiment comprises a washing machine and laundry water circulator configured separately. The laundry water circulator is connected to the washing machine, and alkaline ionized water and rinse water are circulated and reused.

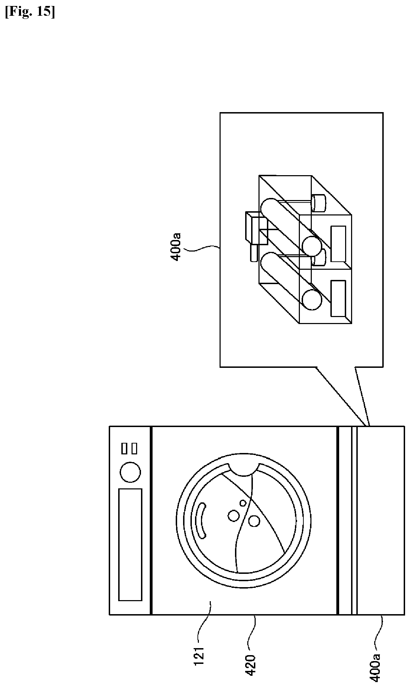

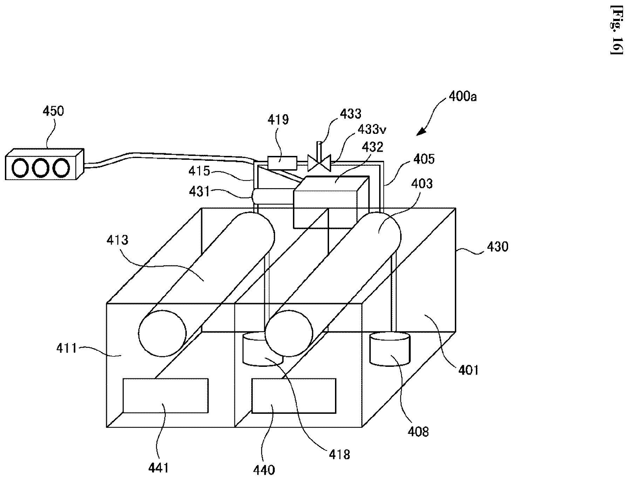

Fig. 15 shows a laundry water circulator 400a installed in the lower part of the washing machine 420 with laundry water circulator 400 housed inside a single enclosure. Fig. 16 is an enlarged drawing of laundry water circulator 400a.

Configuring laundry water circulator 400a is almost identical to the shape of the bottom of washing machine 420, and installing washing machine 420 on top of laundry water circulator 400a is preferred. In the case of laundry water circulator 400a that can be connected to a washing machine for household use, if laundry water circulator 400a is configured in accordance with the dimensions of the laundry pan that is for house installation or of a size that fits inside the laundry pan, then if there is adequate space for a laundry pan, laundry water circulator 400a can also be installed.

As shown in Fig. 16, laundry water circulator 400a houses the temporary storage tank for washing 401 and the temporary storage tank for rinsing 411 in a single enclosure 430.

Laundry water circulator 400a is provided with inflow port 431, flow path switching device 432, discharge outlet 433 and controller 450. Inflow port 431 corresponds to the configuration of the first inflow port 406 and the second inflow port 416 in the schematic diagram of Fig. 14 as one inflow port 431. Since laundry water and rinse water flow into inflow port 431, flow path switching device 432 switches the flow path such that laundry water flows into the temporary storage tank for washing 401 and switches the flow path such that rinse water flows into the temporary storage tank for rinsing 411.

The first inspection port 440, connected to the inside (storage chamber of laundry water) of the temporary storage tank for washing 401, is provided in enclosure 430.

Second inspection port 441 connected to the inside (storage chamber of rinse water) of the temporary storage tank for rinsing 411 is provided in enclosure 430.

First inspection port 440 and second inspection port 441 are used for maintenance of a temporary storage tank for washing 401 and a temporary storage tank for rinsing 411, respectively.

First filtration device 403 and first submersible pump 408 are housed in a temporary storage tank for washing 401.

Second filtration device 413 and second submersible pump 418 are housed in a temporary storage tank for rinsing 411.

First filtration device 403 and second filtration device 413 are cartridge replaceable type filtration devices that are equipped with pleated filters. First filtration device 403, filters the alkaline laundry water and the second filtration device 413, filters the rinse water.

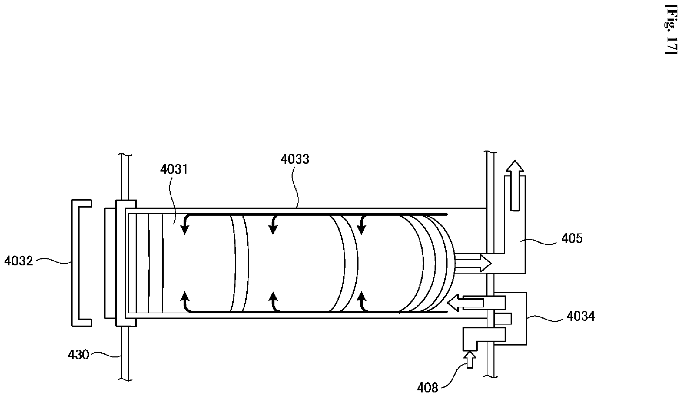

Fig. 17 is an enlarged drawing of the first filtration device 403.

First filtration device 403 is provided with filter cartridge 4031, cap 4032 and exterior body 4033.

Filter cartridge 4031 is housed in an exterior body 4033, supported at one end by the sidewall of enclosure 430, more specifically, the sidewall of the temporary storage tank for washing 401 and sealed with cap 4032. This prevents the laundry water from leaking out of the temporary storage tank for washing 401.

The other end of exterior body 4033 is connected to the first submersible pump 408 by joint member 4034. With this, laundry water before filtration is discharged from the first submersible pump 408, namely, laundry water stored in a temporary storage tank for washing 401 is supplied to the outer surface of filter cartridge 4031 of the first filtration device 403 through joint member 4034. Laundry water before filtration is filtered while percolating from the outer surface to the center of filter cartridge 4031. Then the water is fed to laundry water circulation pipe 405 connected to the center of filter cartridge 4031 and supplied to laundry tub 121 from discharge outlet 433.

The second filtration device 413 has the same configuration as the first filtration device 403. Rinse water before filtration is supplied from the second submersible pump 418 to the second filtration device 413; namely, rinse water stored in a temporary storage tank for rinsing 411 is supplied. Rinse water before filtration is filtered while it percolates from the outer surface to the center of filter cartridge 4031. Then the water is supplied to rinse water circulation pipe 415 connected to the center of filter cartridge 4031. Rinse water circulation pipe 415 is equipped with an ultraviolet LED 419 before discharge outlet 433. Rinse water disinfected by ultraviolet rays is supplied to laundry tub 121 from discharge outlet 433.

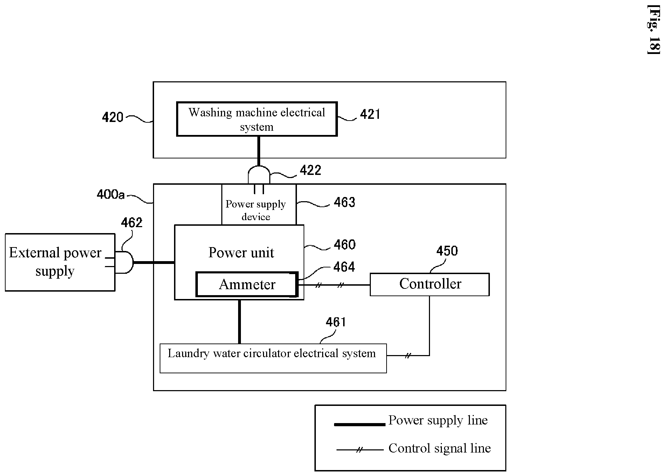

Fig. 18 is an electrical system diagram of washing machine 420 and laundry water circulator 400a.

Washing machine 420 is equipped with washing machine electrical system 421 and plug 422.

Washing machine electrical system 421 is a circuit that supplies electricity to parts that operate on electricity, for example, the motor that rotates laundry tub 121, drive system devices such as water supply valves, and electrical components such as operation panels.

The laundry water circulator 400a is provided with a power unit 460, laundry water circulator electrical system 461, plug 462, power supply device 463 and ammeter 464.

The power unit 460 is a device that draws power by inserting plug 462 into the outlet of an external power supply such as a commercial power supply.

The laundry water circulator electrical system 461 is a circuit that supplies electricity to power-operated components such as drive system devices like flow path switching device 432, first submersible pump 408 and second submersible pump 418, and electrical components like controller 450.

Power supply device 463 powers external devices with the power drawn by power unit 460 through a plug inserted into the outlet of the power supply device 463. By connecting plug 422 of washing machine 420 to the power supply device 463, power is supplied to washing machine 420 via power unit 460 of laundry water circulator 400a.

Ammeter 464 measures the amount of current supplied by power unit 460 to power supply device 463 and outputs the value to controller 450.

Controller 450 sends control signals such as drive signals, stop signals and valve opening and closing signals to the drive system devices and transmission components that constitute the laundry water circulator electrical system 461.

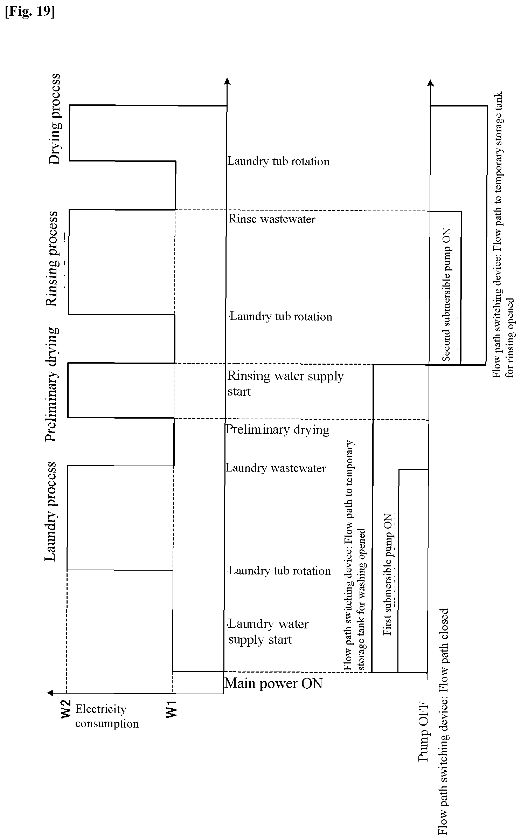

Fig. 19 shows the relationship between the operations of washing machine 420 and the operations of laundry water circulator 400a.

Laundry water circulator 400a needs to switch the flow path of flow path switching device 432 and operate the first submersible pump 408 and second submersible pump 418 according to the operations of the washing machine 420. Controller 450 determines the operations of washing machine 420 based on the values measured by ammeter 464 and outputs various control signals to flow path switching device 432, first submersible pump 408 and second submersible pump 418.

**In** Fig. 19, as a standard process in the washing machine 420, 1 washing process, 1 preliminary drying process, 1 rinsing process, and 1 drying process are performed to wash garments.

For the convenience of explanation, 3 levels of electricity consumption are considered for washing machine 420, 0 when the main power is turned OFF, electricity consumption W1 at standby when the main power is turned ON, and electricity consumption W2 when the laundry tub is rotating. These levels for power consumption are for a model case. The variations in electricity consumption may be even more complex.

As electricity consumption increases, the ammeter 464 reading increases.

Therefore, controller 450, when the value measured by ammeter 464 increases from 0 (when measurement value M1 is obtained as current at electricity consumption W1), outputs an operate signal in preparation for the washing process that controls the flow path of the flow path switching device 432 to the temporary storage tank for washing 401 and turns the first submersible pump 408 ON. It also outputs an "Open" signal to discharge outlet valve 433v (normally closed). Discharge outlet valve 433v can be "Open" until the main power is switched OFF, and control of wastewater from washing machine 420 is performed by washing machine 420.

Next, when the supply of laundry water starts, and laundry tub 121 starts to rotate, ammeter 464 obtains the measurement value M2 as the current for electricity consumption W2.

When the washing process finishes, and laundry tub 121 stops, the value measured by ammeter 464 will be M1. Controller 450 determines that the washing process is finished and sends a stop signal to the first submersible pump 408. Laundry water that is discharged is supplied to a temporary storage tank for washing 401 through inflow port 431 and flow path switching device 432.

Controller 450 determines that the preliminary drying process has started when the measurement value of ammeter 464 rises to M2. Laundry water discharged in the preliminary drying process is supplied to a temporary storage tank for washing 401.

Controller 450 determines that the preliminary drying process has finished and the rinsing process has started when it receives measurement value M1 from ammeter 464. Flow path switching device 432 opens the flow path to a temporary storage tank for rinsing 411 and outputs an operate signal to the second submersible pump 418.

When the rinsing process starts, and the laundry tub 121 starts rotating, controller 450 obtains measurement value M2 from the ammeter 464. Laundry tub 121 stops when rinsing is finished, and controller 450 obtains measurement value M1 from ammeter 464. Controller 450 turns OFF the second submersible pump 418 (outputs a stop signal).

When the drying process starts after the discharge of rinse water, laundry tub 121 rotates, and measurement value M2 is obtained by controller 450. When the drying process is complete, the main power to washing machine 420 is turned OFF, and measurement value 0 is obtained. Controller 450 then returns the flow path switching device 432 to the neutral position. Also outputs a "Close" signal to discharge outlet valve 433v.

According to the present embodiment, laundry water and rinse water can be reused just by connecting the water supply inlet and the discharge outlet of an existing washing machine to the discharge outlet to the inflow port of laundry water circulator 400a, respectively and inserting plug 462 of washing machine 420 into the outlet of the power supply device 463 of laundry water circulator 400a.

Each of the above merely illustrates various embodiments of the present invention, and the invention is not limited to the above embodiments. For example, any combination of the above embodiments is included in the scope of rights of the present invention.

The present invention also includes variations from each of the above embodiments.

For example, the position of open/close valves and pumps is not limited to the above and can be changed as needed.

The position of the ultraviolet irradiation lamp or ultraviolet LED that irradiates ultraviolet light toward the rinse water is not limited to the tank before the filter and can be provided at any position on the rinse water circulation pipe. Preferably, the location where rinse water collects, such as the tank. This ensures a longer ultraviolet irradiation time and a longer sterilization time.

The laundry system of the first to third embodiments may be implemented with a single washing machine, or conversely, the washing machine of the fourth to sixth embodiments, for example, laundry tub and ionized water tank may be configured separately, or a coin-operated laundry system may be configured by sharing an ionized water tank with multiple laundry tubs. The washing machine can be a household-use washing machine or a commercial washing machine. In this way, according to the present invention, the laundry system can be realized in various embodiments, including coin-operated laundries, commercial washing machines, and household-use washing machines, and is included in the scope of rights of the present invention regardless of the realization mode.

In the eighth embodiment, power to washing machine 420 was supplied from the power supply device 463 of laundry water circulator 400a, and controller 450 determined the operation status of washing machine 420. However, the laundry water circulator 400a can be equipped with Bluetooth (registered trademark) and configured to notify the operation status of the washing machine 420 to controller 450.

For example, if a sequence for washing operation with washing machine 420, for example, 1 washing process and 2 rinses are set on the smartphone, the information may be received by the short-distance wireless communication device installed in laundry water circulator 400a and controller 450 of laundry water circulator 400a may perform the flow path control of first submersible pump 408, second submersible pump 418 and flow path switching device 432, and opening and closing of discharge outlet valve 433v, based on the sequence information received.

The eighth embodiment can be said to consist of a dual-use configuration of a temporary storage tank for washing 401 and a filtration standby tank for washing 402, and a temporary storage tank for rinsing 411 and a filtration standby tank for rinsing 412, respectively.

### <Ninth embodiment>

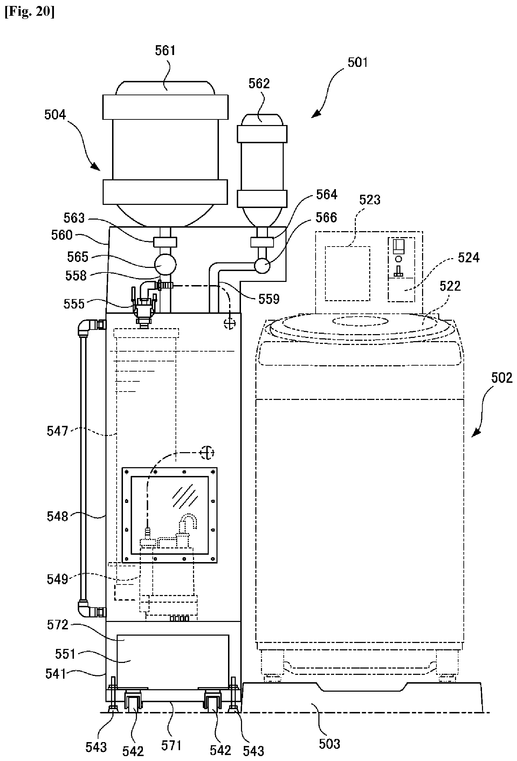

The ninth embodiment of the present invention will be explained with reference to Fig. 20 to Fig. 24.

Fig. 20 is a cross-sectional view from the front side showing the configuration of the laundry system according to the ninth embodiment.

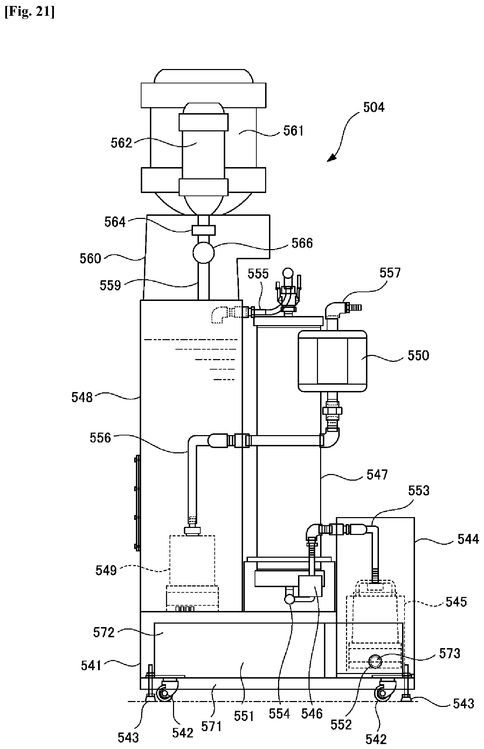

Fig. 21 is a cross-sectional view from the right side showing the laundry water circulator used in the laundry system according to the ninth embodiment.

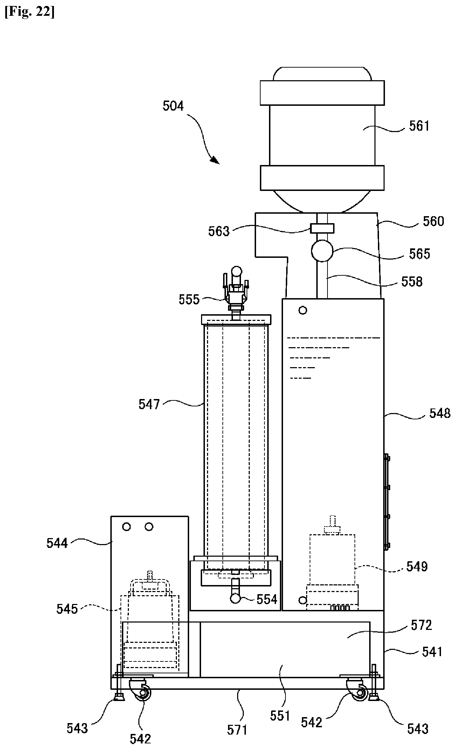

Fig. 22 is a cross-sectional view from the left side showing the laundry water circulator used in the laundry system according to the ninth embodiment.

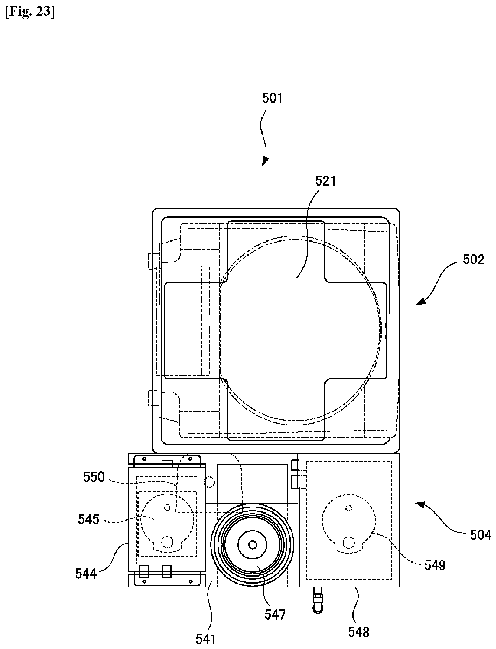

Fig. 23 is a cross-sectional view from the top showing the configuration of the laundry system according to the ninth embodiment.

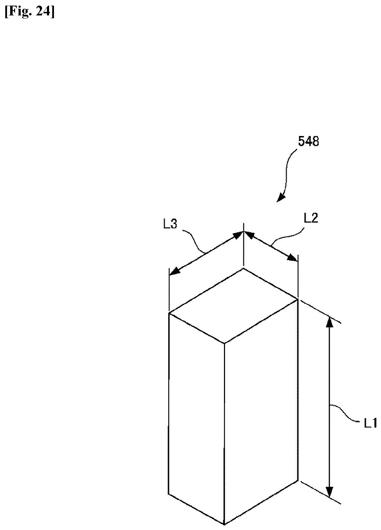

Fig. 24 is a perspective view showing the laundry water tank used in the laundry system according to the ninth embodiment.

### <Configuration of a laundry system>

As shown in Fig. 20, the laundry system 501, according to the ninth embodiment of the present invention, consists of the washing machine 502, washing machine waterproof pan 503, and laundry water circulator 504.

Washing machine 502 is placed on top of the washing machine waterproof pan 503. Washing machine 502 is provided with a laundry tub 521 (see Fig. 23), lid 522, processor 523 and operation panel 524.

The top of the laundry tub 521 (see Fig. 23) can be opened and closed by the manually-operated lid 522. The laundry tub 521 (see Fig. 23) is provided with an electric locking mechanism (not shown in Fig.) for locking lid 522, which locks lid 522 in the closed state in response to a command from processor 523. The processor 523 controls the operation of laundry tub 521 according to the operations by the user on the operation panel 524.

A drainpipe 552 and a water supply pipe 557, shown in Fig. 21, are connected to the laundry tub 521.

As shown in Fig. 21 to Fig. 23, laundry water circulator 504 is provided with frame 541, caster 542, adjuster 543, temporary storage tank 544, first pump 545, fabric softener removal device 546, filter unit 547, laundry water tank 548, second pump 549, UV sterilization equipment 550, control device 551, pipes 552, 553, 554, 555, 556, 557, 558, 559, bottle attachment and detachment enclosure 560, laundry water gallon bottle 561, alkaline ionized water bottle 562, bottle connectors 563, 564, and control valves 565, 566.

Caster 542 to move the laundry water circulator 504 and adjuster 543 to secure the laundry water circulator 504 in place are provided on the bottom surface 571 of frame 541.

Control device 551 is housed in control device storage space 572, provided at the bottom of frame 541.

The temporary storage tank 544 and laundry water tank 548 are secured to frame 541 with bolts. The filter unit 547 is provided on frame 541, which can be attached and detached.

One end of pipe 552 is connected to the drain outlet of the washing machine 502, and the other is connected to the wastewater inlet 573 of the temporary storage tank 544.

The temporary storage tank 544 temporarily stores the laundry water used in laundry tub 521 of washing machine 502, sent through pipe 552.

The first pump 545 is provided inside temporary storage tank 544. The first pump 545 is controlled by control device 551, applies pressure to the laundry water inside the temporary storage tank 544, and sends it to the fabric softener removal device 546 through pipe 553.

The fabric softener removal device 546 removes the fabric softener from the laundry water supplied through pipe 553 if the laundry water contains the softener and then supplies the laundry water to the wastewater inlet at the bottom of the filter unit 547 through pipe 554.

The reason for removing the fabric softener from the laundry water using the fabric softener removal device 546 is that the fabric softener may clog filter unit 547.

In addition, if the laundry water supplied through pipe 553 does not contain the softener, the fabric softener removal device 546 supplies the laundry water to the wastewater inlet at the bottom of the filter unit 547 through pipe 554.

The filter unit 547 is a filtration device that filters the solid matter in the laundry water sent from pipe 554 and supplies the laundry water after filtering the solid matter to the laundry water tank 548 through pipe 555 from the upper laundry water outlet.

The laundry water tank 548 stores the laundry water supplied from pipe 555. The laundry water tank 548 is provided with a water level sensor to detect the level of the stored laundry water. The detection result of the water level sensor is sent to the control device 551.

The laundry water tank 548, as shown in Fig. 24, has a height L1 of 700 mm, a left-right width L2 of 260 mm, and a depth L3 of 350 mm.

The second pump 549 is provided inside laundry water tank 548, as shown in Fig. 21 to Fig. 23. The second pump 549 is controlled by the control device 551, applies pressure to the laundry water inside the laundry water tank 548, and supplies the laundry water to the UV sterilization equipment 550 through pipe 556.

The UV sterilization equipment 550 sterilizes the laundry water by irradiating ultraviolet rays on the laundry water supplied through pipe 556, then supplies the sterilized laundry water to the water supply inlet of the washing machine 502 through pipe 557.

The bottle attachment and detachment enclosure 560 is installed on the upper side of the laundry water tank 548 and houses pipes 558, 559, bottle connectors 563, 564 and control valves 565, 566.

The bottle attachment and detachment enclosure 560 securely holds the laundry water gallon bottle 561 and the alkaline ionized water bottle 562 such that they can be attached and detached.

The upper end of the pipe 558 is provided with a bottle connector 563, which connects to the laundry water gallon bottle 561. The lower end of the pipe 558 is attached to the first water supply inlet at the upper surface of the laundry water tank 548. The control valve 565 is provided in the middle of pipe **558.**

The control valve 565 opens and closes under the control of the control device 551, and when open, supplies laundry water from the laundry water gallon bottle 561 to the laundry water tank 548.

The upper end of the pipe 559 is provided with a bottle connector 564, which connects to the alkaline ionized water bottle 562. The lower end of the pipe 559 is attached to the second water supply inlet at the upper surface of the laundry water tank 548. Control valve 566 is provided in the middle of pipe 559. The control valve 566 opens and closes under the control of the control device 551, and when open, supplies alkaline ionized water from the alkaline ionized water bottle 562 to the laundry water tank 548.

One particularly important aspect is to constantly adjust (supply) the alkalinity level of the alkaline ionized water in the laundry water tank 548 within a certain range. This is because if the alkalinity becomes too neutral, the cleaning and sterilizing effectiveness will decrease.

For example, the alkalinity is measured with an alkalinity measuring device, and the valve (control valve 566) is adjusted when the alkalinity is closer to neutral (falls below a certain threshold value) to increase the alkalinity.

### <Operation of the laundry system>

The operation of the laundry system 501 is explained next.

First, the user attaches the laundry water gallon bottle 561 and alkaline ionized water bottle 562 to the bottle attachment and detachment enclosure 560 and attaches the outlets of laundry water gallon bottle 561 and alkaline ionized water bottle 562 to bottle connector 563, 564.

As a result, the laundry water from the laundry water gallon bottle 561 and the alkaline ionized water from the alkaline ionized water bottle 562 flow into the laundry water tank 548 through pipes 558, 559, respectively.

Next, when the level of laundry water stored in the laundry water tank 548 reaches the preset water level, the detection result of the water level sensor indicates that the preset water level has been reached, and the control device 551 closes control valves 565, 566 based on the detection results of the water level sensor.

As a result, the laundry water tank 548 stores the laundry water mixed with alkaline ionized water at the preset water level.

Next, the washing machine 502 performs operations controlled by processor 523 according to the operations by the user on the operation panel 524. As a result, the processor 523 sends the laundry water supply command to the control device 551 of the laundry water circulator 504.

On receiving the laundry water supply command from processor 523 of the washing machine 502, the control device 551 of laundry water circulator 504 performs operation control of the second pump 549 and the UV sterilization equipment 550.

As a result, laundry water inside the laundry water tank 548 is supplied to the UV sterilization equipment 550 through pipe 556. The UV sterilization equipment 550 sterilizes the laundry water by irradiating ultraviolet rays on the laundry water supplied by pipe 556, then supplies the sterilized laundry water to the laundry tub 521 through the water supply inlet of the washing machine 502 through pipe 557.

Next, washing machine 502 performs washing of the laundry (for example, garments) using the laundry water supplied to the laundry tub 521 from pipe 557. After washing, washing machine 502 sends the laundry water used in laundry tub 521 to the temporary storage tank 544 through pipe 552. The temporary storage tank 544 temporarily stores the supplied laundry water.

Next, the first pump 545 is controlled by the control device 551 and supplies the laundry water from the temporary storage tank 544 to the fabric softener removal device 546 through pipe 553. The fabric softener removal device 546 is controlled by the control device 551 and removes the fabric softener from the laundry water supplied through pipe 553 if the laundry water contains the softener and then supplies the laundry water to the wastewater inlet at the bottom of the filter unit 547 through pipe 554. In addition, if the laundry water supplied through pipe 553 does not contain the softener, the fabric softener removal device 546 supplies the laundry water to the wastewater inlet at the bottom of the filter unit 547 through pipe 554.

The fabric softener removal device 546 is not mandatory. However, if the oil components of the fabric softener enter filter unit 547, it can clog the filter and significantly reduce the filter's performance. Furthermore, the fabric softener removal device 546 is extremely important in a laundry environment where garments (typically fabric softener components that are retained from the previous washes) containing fabric softeners are likely to be mixed. The fabric softener removal device 546 should be provided before the filter unit 547.

The filter unit 547 filters the solid matter in the laundry water sent from pipe 554 and supplies the laundry water after filtering the solid matter to the laundry water tank 548 through pipe 555 from the upper laundry water outlet.

The laundry water tank 548 stores the laundry water supplied from pipe 555.

After the laundry water from the temporary storage tank 544 is supplied to the laundry water tank 548 by the first pump 545, if the detection results of the water level sensor indicate that the specified water level has not been reached, the control device 551 will open control valves 565, 566 based on the sensor's detection results of the water level sensor until the specified water level is reached. Next, if the detection result of the water level sensor reaches the preset water level, the control device 551 will close control valves 565, 566.

As a result, the laundry water tank 548 stores the laundry water at the preset water level.

Next, when washing the next load of laundry, washing machine 502 will start operations according to the user's operations on operation panel 524. As a result, the processor 523 sends the laundry water supply command to the control device 551 of the laundry water circulator 504.

With this, the control device 551 of laundry water circulator 504 performs operation control of the second pump 549 and the UV sterilization equipment 550. As a result, laundry water inside the laundry water tank 548 is supplied to the UV sterilization equipment 550 through pipe 556. The UV sterilization equipment 550 sterilizes the laundry water, then supplies the sterilized laundry water to the laundry tub 521 through the water supply inlet of the washing machine 502 through pipe 557.

Next, the washing machine 502 performs washing of the laundry using the laundry water supplied to the laundry tub 521 from pipe 557.

The laundry system 501 repeats these washing operations.

The water gallon bottle 561 and alkaline ionized water bottle 562 are provided by the supplier and are replaced once a month.

The filter unit 547 is provided by the supplier and replaced once in three months.

### <Summary of the configuration and effects of the ninth embodiment>

Summary of the configuration and effects of the ninth embodiment, the laundry system 501 comprises a laundry tub 521 to wash laundry using laundry water, a laundry water tank 548, a laundry water supply means (control device 551, pipe 558, bottle connector 563, control valve 565) to supply the laundry water to the laundry water tank 548, an alkaline ionized water supply means (control device 551, pipe 559, bottle connector 564, control valve 566) to mix the alkaline ionized water with the laundry water stored in the laundry water tank 548 by supplying alkaline ionized water to the laundry water tank 548, a first laundry water circulation pipe (second pump 549, UV sterilization equipment 550, pipes 556, 557) to supply the water stored in the laundry water tank 548 to the laundry tub 521, and a second laundry water circulation pipe (first pump 545, fabric softener removal device 546, filter unit 547, pipes 552, 553, 554, 555) to supply the laundry water used for laundry in the laundry tub 521 to the laundry water tank 548.

In addition, the laundry system 501 according to the ninth embodiment, comprises a laundry tub 521 to wash laundry using laundry water, a laundry water tank 548, a laundry water supply means (control device 551, pipe 558, bottle connector 563, control valve 565) to supply the laundry water stored in the first bottle (laundry water gallon bottle 561) to the laundry water tank 548, an alkaline ionized water supply means (control device 551, pipe 559, bottle connector 564, control valve 566) to mix the alkaline ionized water with the laundry water stored in the laundry water tank 548 by supplying alkaline ionized water stored in the second bottle (alkaline ionized water bottle 562) to the laundry water tank 548, a first laundry water circulation pipe (second pump 549, UV sterilization equipment 550, pipes 556, 557) to supply the water stored in the laundry water tank 548 to the laundry tub 521, and a second laundry water circulation pipe (first pump 545, fabric softener removal device 546, filter unit 547, pipes 552, 553, 554, 555) to supply the laundry water used for laundry in the laundry tub 521 to the laundry water tank 548.

Furthermore, laundry system 501 is further provided with a filtration device (filter unit 547) in the second laundry water circulation pipe to remove solid matter in the laundry water used for washing in laundry tub 521.

The laundry system 501 is further provided with a fabric softener removal device 546 between the laundry tub 521 and a filtration device (filter unit 547) in the second laundry water circulation pipe to remove the fabric softener in the laundry water.

Because of this configuration, the laundry system 501, according to the ninth embodiment, allows the laundry water discharged from the laundry tub 521 after washing to be stored in the laundry water tank 548 through the second laundry water circulation pipe. The stored laundry water can be supplied again to the laundry tub 521 through the first laundry water circulation pipe to be reused in another laundry washing process, thereby, the cost of washing laundry can be reduced.

In addition, in the laundry system 501, according to the ninth embodiment, the laundry water gallon bottle 561, the alkaline ionized water bottle 562, and the filter unit 547 are provided and replaced by the supplier, thereby expanding the business opportunities for the supplier.

The laundry system 501 may also be provided with drain equipment as ancillary equipment.

In Fig. 20 and Fig. 23, a vertical-type washing machine (beat wash-type washing machine) is illustrated; instead, it may be a twin-tub washing machine (a washing machine in which a laundry tub and a spin-drying tub are provided separately) or a drum-type washing machine (big drum).

Furthermore, in the ninth embodiment, a laundry system installed in general households has been used as the laundry system; however, other laundry systems, such as those installed in laundromats, accommodation facilities, and factories, can also be applied as the laundry system.

More specifically, it may be a laundromat or other facility having two or more laundry tubs 521, with a fewer number of components such as the filter unit 547 (at least one of the laundry water tank 548, fabric softener removal device 546, or laundry water tank 548) than the laundry tub 521.

In such cases, having multiple laundry tubs 521 allows multiple users to wash laundry while using centralized components such as the filter unit 547, enabling improved equipment efficiency, cost reduction, and easier maintenance.

In any of the embodiments, water can be circulated and reused.

Therefore, the laundry system can be operated in areas where it may be difficult to obtain a clean water supply (clean water is available in only a few areas on the earth, and obtaining clean water is difficult in many developing countries), in **confined spaces** (such as ships and submarines), and in regions where water is precious (such as deserts).

Furthermore, the volume of water discarded can be drastically reduced, significantly lowering the environmental impact.

All discarded water can be easily collected, appropriately treated to render it harmless, and either discharged into the environment or reused as water for this laundry system. As described above, an extremely environmentally friendly laundry system can be provided.

The above concludes the description of specific embodiments. However, the invention is not limited to these modes. For example, the laundry in the first embodiment to the ninth embodiment was garments; other items such as shoes, bedding, and stuffed toys can also be considered as the laundry. Additionally, as long as there is no deviation from the main purpose of the present invention, the specific configuration of the laundry system and the specific procedures for operation determination and operation command output control can be appropriately modified.

### Explanation of the Reference Numerals

- 1: : Laundry system
- 1a: : Laundry system
- 1b: : Laundry system
- 1c: : Laundry system
- 1d: : Laundry system
- 1e: : Laundry system
- 1f: : Washing system
- 2: : Washing machine
- 3: : Rinse water circulation pipe
- 3a: : Laundry water circulation pipe
- 3b: : Rinse water circulation pipe
- 4: : Drain equipment
- 5: : Ionized undiluted solution tank
- 5a: : Ionized water tank
- 6: : Tap water
- 21: : Laundry tub
- 22: : Processor
- 23: : Operation panel
- 31: : Upstream circulation pipe
- 31v: : Upstream open/close valve
- 31vb: : Upstream open/close valve
- 32: : Purification tank
- 32b: : Purification tank
- 33: : Downstream circulation pipe
- 33P: : Purification tank pump
- 33Pb: : Purification tank pump
- 34: : Circulation water tank
- 34b: : Circulation water tank
- 35: : Circulation water supply pipe
- 35v: : Circulation water supply valve
- 35vb: : Circulation water supply valve
- 41: : Drainpipe
- 41v: : Drain valve
- 51: : Ionized undiluted solution feed pipe
- 51a: : Ionized water supply pipe
- 51v: : Ionized water supply pipe
- 61: : Tap water supply pipe
- 61v: : Tap water supply valve
- 102: : Washing machine
- 111: : Second water supply inlet
- 121: : Laundry tub
- 122: : Processor
- 123: : Operation panel
- 130: : Bottle cartridge
- 131: : Ionized water bottle
- 132: : Water bottle
- 141: : Laundry water circulation pipe
- 141f: : First filter
- 141p: : First pump
- 141v: : First drain valve
- 142: : Rinse water circulation pipe
- 142f: : Second filter
- 142p: : Second pump
- 142v: : Second drain valve
- 150: : First drain outlet
- 151: : Second drain outlet
- 160: : First water supply inlet
- 161: : Second water supply inlet
- 200: : Washing machine
- 230: : Laundry pan
- 231: : Ionized water tank
- 232: : Rinse water tank
- 233: : Filter
- 234: : Ultraviolet LED
- 235: : Tank before the filter
- 250: : Dryer
- 251: : Discharge mechanism
- 252: : Water replenishment pipe
- 260: : Washing machine
- 261: : Water generator
- 321: : Filter
- 322: : Sedimentation tank
- 323: : Supernatant storage tank
- 324: : Drain outlet
- 325: : Lower partition wall
- 326: : Upper partition wall
- 341: : Densitometer
- 342: : Residual quantity meter
- 342b: : Residual quantity meter
- 400: : Laundry water circulator.
- 400a: : Laundry water circulator.
- 401: : Temporary storage tank for washing
- 402: : Filtration standby tank for washing
- 403: : First filtration device
- 404: : Storage tank for washing
- 405: : Laundry water circulation pipe
- 406: : First inflow port
- 407: : First discharge outlet
- 408: : First submersible pump
- 411: : Temporary storage tank for rinsing
- 412: : Filtration standby tank for rinsing
- 413: : Second filtration device
- 414: : Storage tank for rinsing
- 415: : Rinse water circulation pipe
- 416: : Second inflow port
- 417: : Second drain outlet
- 418: : Second submersible pump
- 419: : Ultraviolet LED
- 420: : Washing machine
- 421: : Washing machine electrical system
- 422: : Plug
- 430: : Enclosure
- 431: : Inflow port
- 432: : Flow path switching device
- 433: : Discharge outlet
- 433v: : Discharge outlet valve
- 440: : First inspection port
- 441: : Second inspection port
- 450: : Controller
- 460: : Power unit
- 461: : Laundry water circulator electrical system
- 462: : Plug
- 463: : Power supply device
- 464: : Ammeter
- 4031: : Filter cartridge
- 4032: : Cap
- 4033: : Exterior body
- 4034: : Joint member
- 501: : Laundry system
- 502: : Washing machine
- 503: : Washing machine waterproof pan
- 504: : Laundry water circulator
- 521: : Laundry tub
- 522: : Lid
- 523: : Processor
- 524: : Operation panel
- 541: : Frame
- 542: : Caster
- 543: : Adjuster
- 544: : Temporary storage tank
- 545: : First pump
- 546: : Fabric softener remover
- 547: : Filter unit
- 548: : Laundry water tank
- 549: : Second pump
- 550: : UV sterilization equipment
- 551: : Control device
- 552, 553, 554, 555, 556, 557, 556, 558, 559: : Pipe
- 560: : Bottle attachment and detachment enclosure
- 561: : Laundry water gallon bottle 561
- 562: : Alkaline ionized water bottle
- 563, 564: : Bottle connector
- 565, 566: : Control valve

## Claims

1. A laundry system **characterized by** a laundry tub used to wash garments using
laundry water,
a laundry water tank,
a laundry water supply means to supply the laundry water to the laundry water tank, an alkaline ionized water supply means to mix alkaline ionized water with the laundry water stored in the laundry water tank by supplying alkaline ionized water to the laundry water tank,
a first laundry water circulation pipe to supply laundry water stored in the laundry water tank to the laundry tub, and
a second laundry water circulation pipe to supply the laundry water used for washing in the laundry tub to the laundry water tank.

2. The laundry system **characterized by** a laundry tub to wash garments using laundry water,
a laundry water tank,
a laundry water supply means to supply the laundry water stored in the first bottle to the laundry water tank,
an alkaline ionized water supply means to mix alkaline ionized water with the laundry water stored in the laundry water tank by supplying alkaline ionized water stored in the second bottle to the laundry water tank,
a first laundry water circulation pipe to supply laundry water stored in the laundry water tank to the laundry tub, and
a second laundry water circulation pipe to supply the laundry water used for washing in the laundry tub to the laundry water tank.

3. The laundry system, according to claims 1 or 2 that is **characterized by** comprising a filtration device in the second laundry water circulation pipe to remove the solid matter present in the laundry water used in the laundry tub for washing.
